# EUROPEAN PATENT APPLICATION

(11) **EP 3 321 871 A1**
(43) Date of publication of application: **16.05.2018**
(21) Application number: 16821537.4
(22) Date of filing: 08.06.2016
(51) Int. Cl.: G06Q 30/02

(54) **CONTENT PROVISION SERVER BY WHICH ADVERTISEMENT IS DISPLAYED, METHOD THEREFOR, AND READABLE RECORDING MEDIUM FOR ELECTRONIC DEVICE IN WHICH METHOD FOR DISPLAYING ADVERTISEMENT WITHIN CONTENT IS RECORDED AS PROGRAM**

(30) Priority: 07.07.2015 KR 20150096800
(71) Applicant: Park, Sung Ho, Seongnam-si, Gyeonggi-do 13503 (KR)
(72) Inventor: Park, Sung Ho, Seongnam-si, Gyeonggi-do 13503 (KR)
(74) Representative: Hague, Alison Jane
(86) International application number: PCT/KR2016/005828
(87) International publication number: WO 2017/007131

(57) **Abstract**

There is provided a method for providing content in which an advertisement is displayed. The method includes the steps of: generating content information, generating display control information by using the content information, and transmitting the content information and the display control information to a user terminal. The display control information enables a part of the content information to be replaced with advertisement information so as to be displayed on a part of a display unit of the user terminal, and enables the replaced advertisement information to be returned back to the content information prior to the replacement so as to be displayed when the replaced advertisement information is moved to another part of the display unit.

## Description

### TECHNICAL FIELD

The present invention relates to a content providing server for providing content in which an advertisement is displayed, a method thereof, and a storage medium readable by an electronic device in which a method for displaying an advertisement in the content is recorded as a program.

### BACKGROUND

Current Internet advertising is mainly classified into three types: keyword advertising, display advertising, and native advertising.

The keyword advertising is an advertising technique in which advertiser's website appears to a person who searches for particular keywords in Internet search website. However, the keyword advertisement has disadvantages due to competition for preemption of head keyword, cost for keyword frequency, difficulty of finding valuable keywords and the like.

The display advertising, which is also known as banner advertising, is an advertising technique in which an advertisement is displayed in a way that occupies a certain space of a web page. Although the display advertising provides convenience for the advertiser, it may cause inconvenience to the user in the mobile environment since it is required to allocate the certain space of the web page.

The native advertising is a type of advertising that creates an advertisement as if it is a core content of a platform. However, since the native advertising is not a type of advertising that an advertisement is inserted in content but a type of advertising that the advertisement itself becomes the content, it is difficult to expose the advertisement to a large number of consumers.

As described above, currently available Internet advertising methods have difficulties in exposure to the user or difficulty in matching with the content.

Korean Patent Application Publication No. 10-2015-0035100 is a related art which discloses Internet advertisement method for providing advertisement banner in response to a scroll operation. In this method, a display of the advertisement banner is changed according to a direction of the scroll operation.

### SUMMARY

In view of the above, the present invention provides an advertisement displaying method in which an advertisement appears to a user in friendly and various form.

In accordance with an aspect of the present invention, there is provided a method for providing content in which an advertisement is displayed, the method including: generating content information; generating display control information by using the content information; and transmitting the content information and the display control information to a user terminal. The display control information renders a part of the content information to be replaced with advertisement information and renders the replaced advertisement information to be displayed on a part of a display unit of the user terminal, and when the replaced advertisement information is moved to another part of the display unit, the display control information further renders the replaced advertisement information to be returned back to the part of the content information before being replaced and renders the part of the content information before being replaced to be displayed on said another part of the display unit.

It is preferable that the another part of the display unit may be a predetermined region on an upper part of the display unit.

Further, it is preferable that at least one of a word, an image and a banner included in the content information may be replaced with at least one of a word, an image and a banner included in the advertisement information.

Further, it is preferable that the generating display control information may include generating display control information which renders a detail of the replaced advertisement information to be displayed on the display unit when the user terminal detects a signal for a click operation or a touch operation on the replaced advertisement information.

In accordance with another aspect of the present invention, there is provided a content providing server for providing content in which an advertisement is displayed, the content providing server including: a content information generating unit configured to generate content information; a display control information generating unit configured to generate display control information by using the content information; and a communication unit configured to transmit the content information and the display control information to a user terminal. The display control information renders a part of the content information to be replaced with advertisement information and renders the replaced advertisement information to be displayed on a part of a display unit of the user terminal, and when the replaced advertisement information is moved to another part of the display unit, the display control information further renders the replaced advertisement information to be returned back to the part of the content information before being replaced and renders the part of the content information before being replaced to be displayed on said another part of the display unit.

It is preferable that the another part of the display unit may be a predetermined region on an upper part of the display unit.

Further, it is preferable that at least one of a word, an image and a banner included in the content information may be replaced with at least one of a word, an image and a banner included in the advertisement information.

Further, it is preferable that the display control information generating unit may be further configured to generate display control information which renders a detail of the replaced advertisement information to be displayed on the display unit when the user terminal detects a signal for a click operation or a touch operation on the replaced advertisement information.

In accordance with still another aspect of the present invention, there is provided a storage medium readable by an electronic device, in which a method for displaying an advertisement in content is recorded as a program. The method for displaying the advertisement in the content includes: receiving advertisement information; displaying content information, which is received from the outside or held therein, on a display unit while replacing a part of the content information with the advertisement information and displaying the advertisement information on a part of the display unit; and displaying the part of the content information before being replaced by returning the replaced advertisement information back to the part of the content information before being replaced when the replaced advertisement information is moved to be displayed on another part of the display unit.

It is preferable that the another part of the display unit may be a predetermined region on an upper part of the display unit.

Further, it is preferable that at least one of a word, an image and a banner included in the content information may be replaced with at least one of a word, an image and a banner included in the advertisement information.

Further, it is preferable that the method for displaying the advertisement in the content may further include detecting a signal for a click operation or a touch operation on the replaced advertisement information; and displaying a detail of the replaced advertisement information on the display unit.

With such configuration, it is possible to minimize influence of the advertisement on the display of the content, and expose the advertisement to the user in friendly and various forms.

### BRIEF DESCRIPTION OF THE DRAWINGS

FIG. 1 is a block diagram showing a configuration of a content providing server for providing content in which an advertisement is displayed in accordance with one embodiment of the present invention.
FIGS. 2A and 2B show an example of displaying an advertisement on a display unit of a user terminal in accordance with one embodiment of the present invention.
FIGS. 3A to 3C show another example of displaying an advertisement on the display unit of the user terminal in accordance with one embodiment of the present invention.
FIGS. 4A and 4B show another example of displaying an advertisement on the display unit of the user terminal in accordance with one embodiment of the present invention.
FIG. 5 is a flowchart illustrating a method of providing content in which an advertisement is displayed in accordance with one embodiment of the present invention.
FIG. 6 is a block diagram showing a configuration of the user terminal in accordance with one embodiment of the present invention.
FIG. 7 is a flowchart illustrating a method for displaying an advertisement in content according to one embodiment of the present invention.

### DETAILED DESCRIPTION

While the present invention is susceptible to various modifications and alternative forms, specific embodiments thereof have been shown by way of example in the drawings and are herein described in detail. It should be understood, however, that the description herein of specific embodiments is not intended to limit the present invention to the particular forms disclosed, but on the contrary, the intention is to cover all modifications, equivalents, and alternatives falling within the spirit and scope of the present invention as defined by the appended claims.

Further, in the description of the present invention, when it is determined that the detailed description of the related art would obscure the gist of the present invention, the description thereof will be omitted.

Hereinafter, embodiments of the present invention will be described in detail with reference to the accompanying drawings. For better understanding overall in describing aspects of the present invention, like reference numerals will be given to like parts regardless of the figure number.

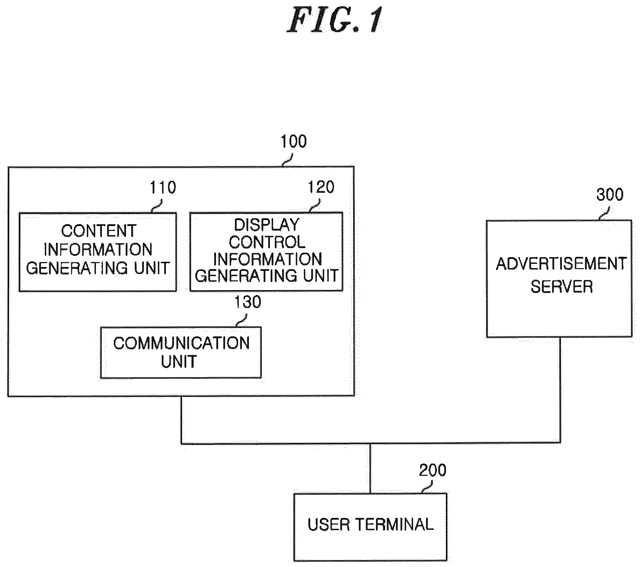

FIG. 1 is a block diagram showing a configuration of a content providing server for providing content in which an advertisement is displayed in accordance with one embodiment of the present invention.

Referring to FIG. 1, a content providing server 100 for providing content in which an advertisement is displayed includes a content information generating unit 110, a display control information generating unit 120, and a communication unit 130.

The content information generating unit 110 is configured to generate content information to be provided to a user. The content information includes news, shopping information, cultural information and the like, which are displayed in a text format, an image format, a video format or the like. The content information is displayed through a display unit 230 of a user terminal 200.

The generated content information can be embedded in HTML (HyperText Markup Language) which can be read through a browser on a PC or a mobile.

The display control information generation unit 120 is configured to generate display control information by using the content information.

The display control information may be inserted in a form of a tag in an HTML file to be transmitted to the user terminal.

The user terminal may receive advertisement information by requesting an advertisement from an advertisement server 300. In this case, the display control information may further include information for causing the user terminal to request and receive the advertisement.

The content providing server 100 may receive the advertisement information from the advertisement server 300 and transmit the received advertisement information to the user terminal. Alternatively, the advertisement server 300 may receive the content information from the content providing server 100 or autonomously generate the content information and transmit the content information together with the advertisement information to the user terminal. As described above, the advertisement information can be provided to the user terminal in various routes.

The display control information is used to replace a part of the content information with the advertisement information and display the replaced advertisement information on a part of the display unit 230 of the user terminal 200. Further, when the replaced advertisement information is moved to another part of the display unit 230, the replaced advertisement information is returned back to the original content information and the original content information is displayed again.

The user terminal 200 may be the PC or the mobile and is configured to read an HTML file including the display control information and the content information through a program such as a browser or the like. Accordingly, the content information is displayed on the display unit 230 of the user terminal 200 in a form of a web page. At this time, the advertisement information is also displayed together with the content information in a state where a part of the content information is replaced with the advertisement information.

For example, a specific word in the content information may be replaced with an advertisement keyword in the advertisement information. Such replacement may be performed in various ways. For example, a specific word is replaced with an advertisement keyword, a word is randomly selected in each paragraph and is replaced with an advertisement keyword, specific words at certain intervals are replaced with advertisement keywords (e.g., the replacement is performed for every 50 words) and so on. In addition, not only a one-to-one replacement in which one word is replaced with one advertisement keyword is performed but also a plurality of words may be replaced with a plurality of advertisement keywords. Moreover, it is also possible to advertise in a story telling manner by replacing a sentence included in the content information with the advertisement keywords.

Further, the content information to be replaced may be an image, a video image or the like as well as a word.

A part of the content information is replaced with the advertisement information, and the replaced advertisement information is displayed only on a part of the display unit 230 of the user terminal 200. For example, when the display unit 230 is divided into an upper region and a lower region, only the content information is displayed on the upper region while the content information and the advertisement information which replaces a part of the content information are displayed together on the lower region. The region on which the replaced advertisement information is displayed may be defined in various sizes. Further, it is preferable that, on the upper region, only the content information is displayed since the user's gaze mainly stays in the upper region.

The advertisement information, which replaces a part of the content information on the lower region, may move to the upper region in response to a scroll operation of the user. In this case, on the upper region, the replaced advertisement information is controlled to be returned back to the original content information before the replacement, and the original content information is displayed again on the upper region. The reason for performing such returning operation on the upper region is also because the user's gaze mainly stays in the upper region. That is, according to the operation of the embodiment of the present invention, the user is allowed to read the information originally intended to be seen by a primary field of view of the user and read the advertisement information by a secondary field of view of the user. When the advertisement information comes into the primary field of view, the advertisement information returns back to the original content information, so that the inconvenience caused by the advertisement information inserted in the content can be solved. Further, when a specific word is only replaced with an advertisement keyword, the user can recognize a sentence including the advertisement keyword by either the primary field of view or the secondary field of view, which makes it possible to stimulate interest and maximize the effect of the advertisement due to the interest of content.

When the display of the web page reaches the bottom of the web page by the scroll operation of the user terminal 200, it is preferable to display the content information only in both of the upper region and the lower region without displaying the advertisement information. This is because the lowest level of the web page cannot be displayed in the upper region, and therefore, the content information before the replacement cannot be displayed.

When the user terminal 200 detects a signal for a click operation or a touch operation on the replaced advertisement information, the display control information generating unit 120 displays the detail of the replaced advertisement information on the display unit 230.

In other words, when the user touches or clicks on the replaced advertisement information such as the advertisement keyword or the advertisement image displayed on the display unit 230, the user terminal 200 controls the display control information to display the detail of the advertisement information on the display unit 230 in a box form or as a separate web page through a pop-up or the like.

The communication unit 130 is configured to transmit the content information and the display control information to the user terminal 200.

The content information and the display control information can be embedded and transmitted as information in the HTML file.

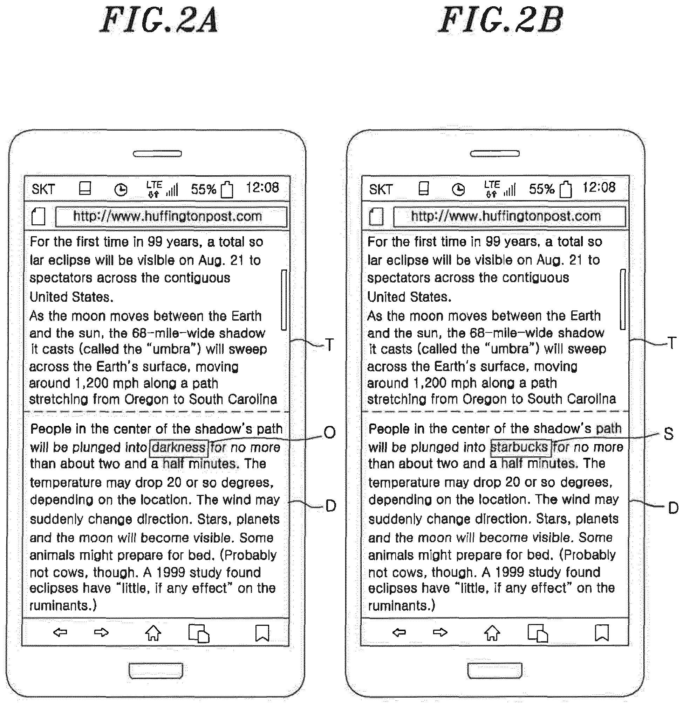

FIGS. 2A and 2B show an example of displaying an advertisement on the display unit 230 of the user terminal 200 in accordance with one embodiment of the present invention.

Referring to FIGS. 2A and 2B, the display unit 230 is divided into an upper region T and a lower region D.

A specific word O (see FIG. 2A) is replaced with an advertisement keyword S (see FIG. 2B) and the advertisement keyword S is displayed on the lower region D. The user terminal may detect a click operation or a touch operation on the advertisement keyword S and connect to a link provided with detailed advertisement information.

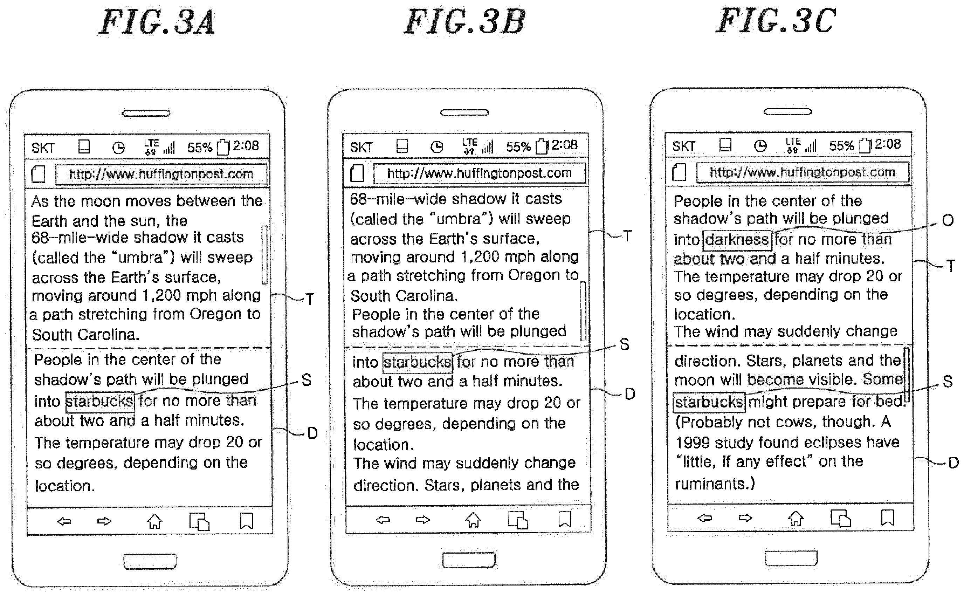

FIGS. 3A to 3C show another example of displaying an advertisement on the display unit 230 of the user terminal 100 in accordance with one embodiment of the present invention.

The replaced advertisement keyword S is displayed while moving upward on the display unit 230 in response to the scroll operation of the user (see FIGS. 3A and 3B). When the replaced advertisement keyword S is moved into the upper region T, the advertisement keyword S returns back to the specific word O, which is original content information before being replaced (see FIG. 3C). At this time, another specific word in the lower region D is replaced with the advertisement keyword S (see Fig. 3C).

When the advertisement keyword returns back to the original content information, the user terminal 100 may display the returning operation with various animation effects. In other words, the user terminal 100 may display a flip animation effect in which the advertisement keyword is flipped over to display the original content information at the time when the advertisement keyword moves from the lower region D into the upper region T, a fade-out animation effect in which the advertisement keyword is gradually faded out to display the original content information, and so on. Such an animation effect may be generated in advance by the content providing server 100 as the display control information.

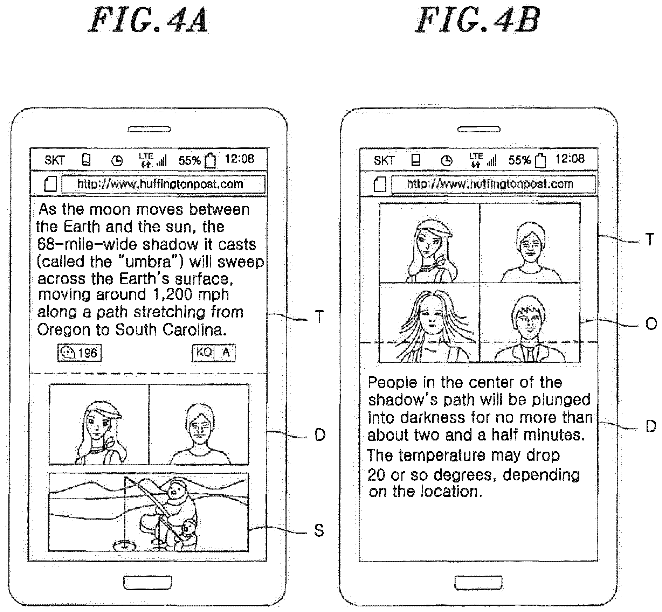

FIGS. 4A and 4B show another example of displaying an advertisement on the display unit 230 of the user terminal 200 in accordance with one embodiment of the present invention.

In FIG. 4A, a part of an image in the lower region D is replaced with a public advertisement S. Although a replacement of a part of the entire image is merely shown in FIG. 4A, the present invention is not limited thereto. For example, the entire image may be replaced with one advertisement image or may be replaced with several advertisement images.

In FIG. 4B, since the replaced public advertisement is moved into the upper region T, the replaced public advertisement returns back to an image O included in original content information. In the case of the replacement of the image, it is preferable that the returning operation to the original image O is performed when at least a part of the replaced advertisement is moved into the upper region T. For the convenience of the user, the upper region T may have a size bigger than that of the lower region D. For example, 3/4 or more of a screen may be set as the upper region.

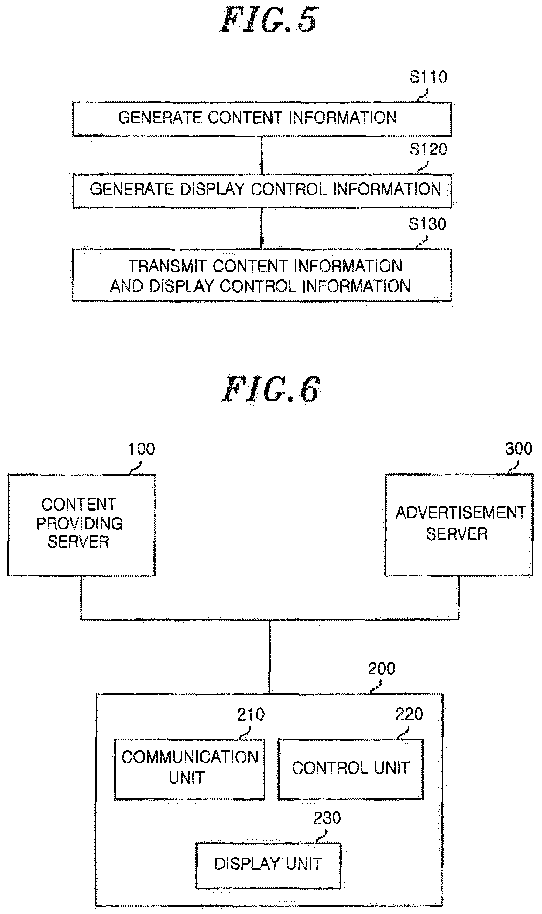

FIG. 5 is a flowchart illustrating a method of providing content in which an advertisement is displayed in accordance with one embodiment of the present invention.

In step S210, the content providing server 100 generates content information.

In step S220, the content providing server 100 generates display control information using the content information. The description on the details of the display control information will be omitted herein since it has been described in detail with reference to FIG. 1.

In step S230, the content providing server 100 transmits the content information and the display control information to the user terminal 200.

The content providing server 100 provides the content information to the user terminal 100 and displays the advertisement information on the display unit 230 of the user terminal 100 in the above described manner. Therefore, it is possible to display the advertisement within the content displayed on the user terminal 100.

FIG. 6 is a block diagram showing a configuration of the user terminal 200 in accordance with one embodiment of the present invention.

The user terminal 200 according to the embodiment of the present invention includes a communication unit 210, a control unit 220, and the display unit 230.

The communication unit 210 is configured to receive the advertisement information from the advertisement server 300.

The control unit 220 is configured to display the content information on the display unit 230 and replace a part of the content information with the advertisement information to display the advertisement information on a part of the display unit 230.

The content information may be received from the content providing server 100 or may be generated or held by the user terminal.

The control unit 220 is further configured to, when the advertisement information is moved into another part of the display unit 230, display the original content information before being replaced by returning the advertisement information back to the original content information.

The control unit 220 is further configured to detect a signal for a click operation or a touch operation on the replaced advertisement information to display the detail of the advertisement information on the display unit 230.

The detail description of displaying the content information, the advertisement information, and the details of advertisement information on the display unit 230 under the control of the control unit 220 will be omitted herein since it has been described with reference to FIG. 1.

The display unit 230 is configured to visually display the content information, the advertisement information, and the details of the advertisement information to the user.

The user terminal 200 may perform an advertisement display method to be described later by using the above-described components.

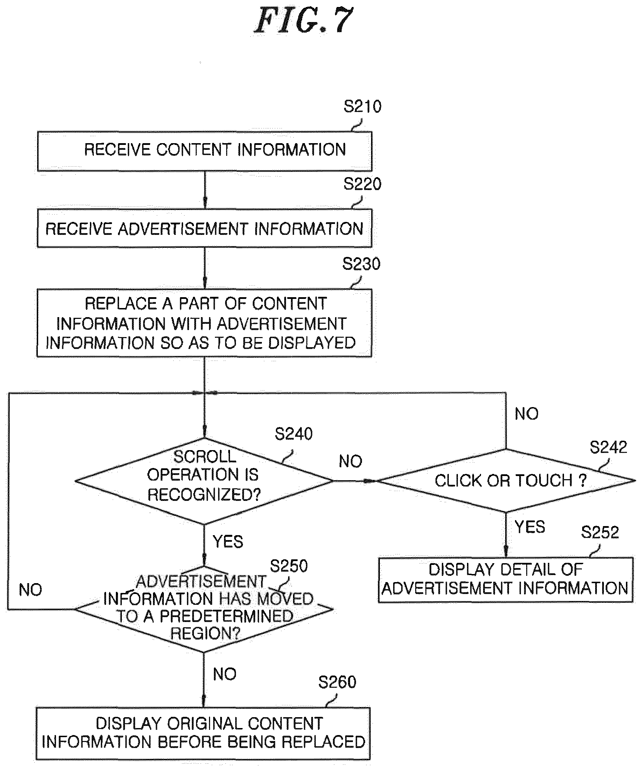

FIG. 7 is a flowchart illustrating a method for displaying the advertisement in content according to one embodiment of the present invention.

In step S210, the user terminal 200 receives content information from the content providing server 100. However, as previously described, the content information may be generated or held by the user terminal 200.

In step S220, the user terminal 200 receives advertisement information from the advertisement server 300. The order of steps S210 and S220 may be reversed.

In step S230, the user terminal 200 displays the content information on the display unit 230 while replacing a part of the content information with the advertisement information and displaying the advertisement information on a part of the display unit 230.

In step S240, the user terminal 200 recognizes the scroll operation. The user scrolls the screen downward to view a web page or the like that is formed to be longer than an entire region that can be displayed on the display unit 230. If the scroll operation is recognized, the process proceeds to step S250, and if the scroll operation is not recognized, the process proceeds to step S242.

In step S242, the user terminal 200 determines whether or not a click operation (in the case of a PC) or a touch operation (in the case of a PC or a mobile device) on the replaced advertisement information is detected. If the click operation or the touch operation is detected, the process proceeds to step S252, and if not, the process returns to step S240.

In step S252, the user terminal 200 displays the detail of the replaced advertisement information that the user clicked on.

In step S250, the user terminal 200 determines whether or not the replaced advertisement information has moved to a predetermined region on the display unit 230 by the scroll operation of the user. If the replaced advertisement information is moved to the predetermined region, the process proceeds to step S260, and if not, the process returns to step S240. The display unit 230 of the user may be divided into an upper region and a lower region, and the upper region may be set as the predetermined region.

In step S260, the user terminal 200 returns the replaced advertisement information back to the original content information before being replaced and displays it on the display unit 230.

The above-described method for displaying the advertisement in content can be recorded as a program in a storage medium, which is readable by an electronic device such as a PC or a mobile device. In case of the mobile device, such a program may be, for example, in the form of HTML or an application made for use in mobile device. The content providing server may generate HTML capable of executing the method for displaying the advertisement in content and provide the generated HTML to the user terminal, or may generate a program capable of executing the method for displaying the advertisement in content and provide the generated program to the user terminal through the application seller.

In the method for displaying the advertisement in content, the advertisement information can be provided together with the content information, and further the advertisement can be displayed by using the currently available content. In addition, the method may further provide a module for the user to select a preferred advertisement among various kinds or forms of advertisements to provide a user-customized advertisement.

The terms used herein are used to only explain exemplary embodiments, not to limit the present invention. Further, it should be understood that the terms "include" or "have" used in the exemplary embodiments of the present disclosure are to indicate the presence of features, numbers, steps, operations, elements, parts, or a combination thereof described in the specification, and do not preclude the presence or addition of one or more other features, numbers, steps, operations, elements, parts, or a combination thereof.

## Claims

1. A method for providing content in which an advertisement is displayed, the method comprising:
generating content information;
generating display control information by using the content information; and
transmitting the content information and the display control information to a user terminal,
wherein the display control information renders a part of the content information to be replaced with advertisement information and renders the replaced advertisement information to be displayed on a part of a display unit of the user terminal, and
wherein when the replaced advertisement information is moved to another part of the display unit, the display control information further renders the replaced advertisement information to be returned back to the part of the content information before being replaced and renders the part of the content information before being replaced to be displayed on said another part of the display unit.

2. The method of claim 1, wherein said another part of the display unit is a predetermined region on an upper part of the display unit.

3. The method of claim 1, wherein at least one of a word, an image and a banner included in the content information is replaced with at least one of a word, an image and a banner included in the advertisement information.

4. The method of claim 1, wherein said generating display control information includes generating display control information which renders a detail of the replaced advertisement information to be displayed on the display unit when the user terminal detects a signal for a click operation or a touch operation on the replaced advertisement information.

5. A content providing server for providing content in which an advertisement is displayed, the content providing server comprising:
a content information generating unit configured to generate content information;
a display control information generating unit configured to generate display control information by using the content information; and
a communication unit configured to transmit the content information and the display control information to a user terminal,
wherein the display control information renders a part of the content information to be replaced with advertisement information and renders the replaced advertisement information to be displayed on a part of a display unit of the user terminal, and
wherein when the replaced advertisement information is moved to another part of the display unit, the display control information further renders the replaced advertisement information to be returned back to the part of the content information before being replaced and renders the part of the content information before being replaced to be displayed on said another part of the display unit.

6. The content providing server of claim 5, wherein said another part of the display unit is a predetermined region on an upper part of the display unit.

7. The content providing server of claim 5, wherein at least one of a word, an image and a banner included in the content information is replaced with at least one of a word, an image and a banner included in the advertisement information.

8. The content providing server of claim 5, wherein the display control information generating unit is further configured to generate display control information which renders a detail of the replaced advertisement information to be displayed on the display unit when the user terminal detects a signal for a click operation or a touch operation on the replaced advertisement information.

9. A storage medium readable by an electronic device, in which a method for displaying an advertisement in content is recorded as a program, wherein the method for displaying the advertisement in the content includes:
receiving advertisement information;
displaying content information, which is received from the outside or held therein, on a display unit while replacing a part of the content information with the advertisement information and displaying the advertisement information on a part of the display unit; and
displaying the part of the content information before being replaced by returning the replaced advertisement information back to the part of the content information before being replaced when the replaced advertisement information is moved to be displayed on another part of the display unit.

10. The storage medium of claim 9, wherein said another part of the display unit is a predetermined region on an upper part of the display unit.

11. The storage medium of claim 9, wherein at least one of a word, an image and a banner included in the content information is replaced with at least one of a word, an image and a banner included in the advertisement information.

12. The storage medium of claim 9, wherein the method for displaying the advertisement in the content further includes:
detecting a signal for a click operation or a touch operation on the replaced advertisement information; and
displaying a detail of the replaced advertisement information on the display unit.
